# EUROPEAN PATENT APPLICATION

(11) **EP 4 769 097 A1**
(43) Date of publication of application: **01.07.2026**
(21) Application number: 24855847.0
(22) Date of filing: 21.08.2024
(51) Int. Cl.: G06F 3/0482

(54) **CONTENT PUBLISHING METHOD AND APPARATUS, AND ELECTRONIC DEVICE AND STORAGE MEDIUM**

(30) Priority: 21.08.2023 CN 202311058345
(71) Applicant: Beijing Zitiao Network Technology Co., Ltd., Beijing 100190 (CN)
(72) Inventor: ZHANG, Chengcheng, Beijing 100028 (CN); SUN, Yuze, Beijing 100028 (CN)
(74) Representative: Grünecker Patent- und Rechtsanwälte PartG mbB
(86) International application number: PCT/CN2024/113727
(87) International publication number: WO 2025/040125

(57) **Abstract**

Embodiments of the disclosure provide a method, an apparatus, an electrnoic device, and a storage medium for posting content. The method for posting content includes: displaying an obtaining interface in response to a predetermined association operation in a chat interface corresponding to a target group; obtaining a target media resource in response to a media resource obtaining operation in the obtaining interface; and posting, in response to a posting operation for the target media resource, the target media resource as media content including a chat control, the chat control being a control associated with the target group.

## Description

This application claims priority to Chinese Patent Application No. 202311058345.8, filed on August 21, 2023, and entitled "Method, Apparatus, Electronic Device, and Storage Medium for Posting Content", the entire content of which is incorporated herein by reference.

### FIELD

Embodiments of the present disclosure relate to the technical field of computers, in particular to a method, an apparatus, an electronic device, and a storage medium for posting content.

### BACKGROUND

An application refers to a computer program that completes a specific work or a plurality of specific works, runs in a user mode, may interact with a user, and has a visual user interface. Chat functions are provided in the application, for example, a multi-person chat is implemented through a group chat.

### SUMMARY

The present disclosure provides a method, an apparatus, an electronic device and a storage medium for posting content.

According to a first aspect, an embodiment of the present disclosure provides a method of posting content. The method includes: displaying an obtaining interface in response to a predetermined association operation in a chat interface corresponding to a target group; obtaining a target media resource in response to a media resource obtaining operation in the obtaining interface; and posting, in response to a posting operation for the target media resource, the target media resource as media content including a chat control, the chat control being a control associated with the target group.

According to a second aspect, an embodiment of the present disclosure further provides an apparatus for posting content. The apparatus includes: a display module configured to display an obtaining interface in response to a predetermined association operation in a chat interface corresponding to a target group; an obtaining module configured to obtain a target media resource in response to a media resource obtaining operation in the obtaining interface; and a posting module configured to post, in response to a posting operation for the target media resource, the target media resource as media content including a chat control, the chat control being a control associated with the target group.

According to a third aspect, an embodiment of the present disclosure further provides an electronic device. The electronic device includes: one or more processing devices; and a storage device configured to store one or more programs, where the one or more programs, when executed by the one or more processing devices, implement the method of posting content provided in the embodiments of the present disclosure.

According to a fourth aspect, an embodiment of the present disclosure further provides a storage medium including computer-executable instructions, where the computer-executable instructions, when executed by a computer processor, are configured to perform the method of posting content provided in the embodiments of the present disclosure.

### BRIEF DESCRIPTION OF DRAWINGS

The above and other features, advantages, and aspects of various embodiments of the present disclosure will become more apparent from the following detailed description taken in conjunction with the accompanying drawings. Throughout the drawings, the same or similar reference numbers refer to the same or similar elements. It should be understood that the drawings are schematic, and members and elements are not necessarily drawn to scale.
FIG. 1 is a schematic flowchart of a method of posting content according to an embodiment of the present disclosure;
FIG. 2 is a schematic flowchart of a further method of posting content according to an embodiment of the present disclosure;
FIG. 3 is a schematic flowchart of a still further method of posting content according to an embodiment of the present disclosure;
FIG. 4 is a schematic interface diagram of a chat interface according to an embodiment of the present disclosure;
FIG. 5 is a schematic interface diagram of an obtaining interface according to an embodiment of the present disclosure;
FIG. 6 is a schematic interface diagram of a posting interface according to an embodiment of the present disclosure;
FIG. 7 is a schematic interface diagram of an interface for presenting media content according to an embodiment of the present disclosure;
FIG. 8 is a schematic interface diagram of a chat association interface according to an embodiment of the present disclosure;
FIG. 9 is a schematic structural diagram of an apparatus for posting content according to an embodiment of the present disclosure;
FIG. 10 is a schematic structural diagram of an electronic device according to an embodiment of the present disclosure.

### DETAILED DESCRIPTION

Embodiments of the present disclosure will be described in more detail below with reference to the accompanying drawings. While certain embodiments of the present disclosure are shown in the drawings, it is to be understood that the present disclosure may be implemented in various forms and should not be construed as being limited to the embodiments set forth herein. Rather, these embodiments are provided for a more thorough and complete understanding of the present disclosure. It should be understood that the drawings and embodiments of the present disclosure are for illustrative purposes only and are not intended to limit the scope of the present disclosure.

It should be understood that various operations described in the method embodiments of the present disclosure may be performed in different orders, and/or performed in parallel. Further, the method embodiments may include additional operations and/or omit performing the illustrated operations. The scope of the present disclosure is not limited in this regard.

As used herein, the term "comprising" and variations thereof are open-ended, i.e., "including but not limited to". The term "based on" is "based at least in part on". The term "one embodiment" refers to "at least one embodiment"; the term "a further embodiment" refers to "at least one further embodiment"; the term "some embodiments" means "at least some embodiments". The relevant definitions of other terms will be given below.

It should be noted that the concepts such as "first", "second" or the like mentioned in the present disclosure are merely used to distinguish different apparatuses, modules, or units, and are not intended to limit the order of functions performed by the apparatuses, modules or units, or the mutual dependency relationship therebetween.

It should be noted that the modification of "a" and "a plurality" mentioned in the present disclosure is illustrative and not limiting, and should be understood by those skilled in the art as "one or more" unless explicitly indicated otherwise in the context.

The names of messages or information interacted between the plurality of apparatuses in embodiments of the present disclosure are for illustrative purposes only and are not intended to limit the scope of such messages or information.

It may be understood that, before the technical solutions disclosed in the embodiments of the present disclosure are used, types, usage scopes, usage scenarios and the like of personal information related to the present disclosure should be notified to the user in an appropriate manner according to the relevant laws and regulations and obtain the authorization from the user.

For example, in response to receiving an active request from a user, prompt information is sent to the user to explicitly prompt the user that the requested operation will need to obtain and use the personal information of the user. Therefore, the user may autonomously select whether to provide personal information to software or hardware, such as an electronic device, an application, a server, a storage medium, or the like, executing the operation of the technical solution of the present disclosure according to the prompt information.

As an optional but non-limiting implementation, in response to receiving the active request of the user, the manner of sending the prompt information to the user may be, for example, a pop-up window, and the prompt information may be presented in a text manner in the pop-up window. In addition, the pop-up window may further carry a selection control for the user to select "agree" or "not agree" to provide personal information to the electronic device.

It may be understood that the foregoing notification and obtaining a user authorization process is merely illustrative, and does not constitute a limitation on implementations of the present disclosure, and other manners of meeting related laws and regulations may also be applied to implementations of the present disclosure.

It may be understood that data involved in the technical solution (including but not limited to the data itself, the acquisition or use of the data) should follow the requirements of the corresponding laws and regulations and related provisions.

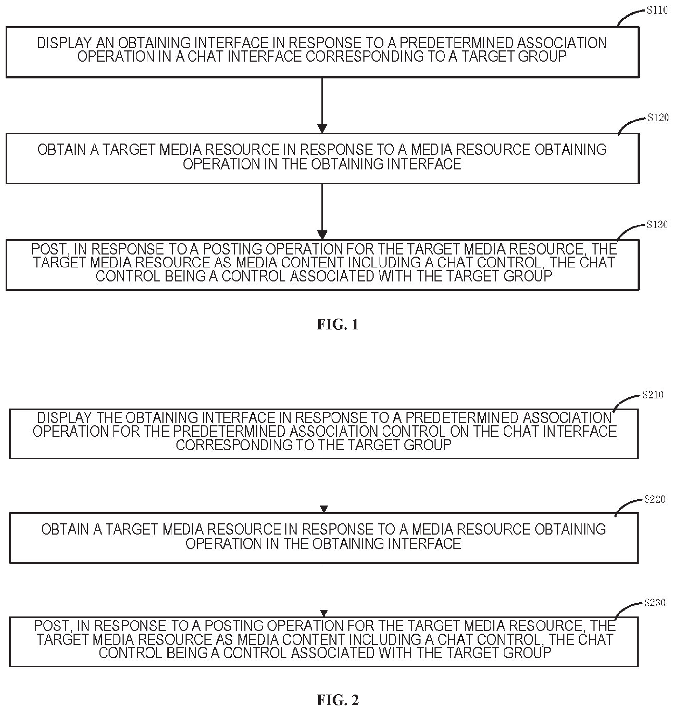

FIG. 1 is a schematic flowchart of a method of posting content according to an embodiment of the present disclosure. The embodiments of the present disclosure are applicable to scenarios involving content posting, such as posting media content within an application. The method may be performed by an apparatus for posting content, and the apparatus may be implemented in a form of software and/or hardware, optionally, implemented by an electronic device, and the electronic device may be a mobile terminal, a PC terminal, a server, or the like.

The method of posting content provided by the present disclosure may be performed in an application, which is not limited herein.

As shown in FIG. 1, the method includes: S110, displaying an obtaining interface in response to a predetermined association operation in a chat interface corresponding to a target group. The target group may be a group within an application. The chat interface corresponding to the target group may be an interface of the target group implementing the chat. The predetermined association operation may be a predetermined operation for posting media content including a control associated with the target group. For example, the predetermined association operation is an operation of triggering the display of the obtaining interface. The present disclosure does not limit an operation manner of a predetermined association operation, for example, may be an operation of tapping a control. A style and a position of the control are not limited herein, for example, the control may be a control directly displayed in a chat interface, or may be a control in a lower-level interface of a chat interface. The obtaining interface may be considered as an interface for obtaining a media resource, such as a shooting page or an album selection page. The shooting page may be considered as an interface for implementing media resource shooting. The album selection page may be considered as an interface for implementing local obtaining of the media resource.

In this operation, after the predetermined association operation is detected in the chat interface corresponding to the target group, the obtaining interface is displayed in response to the predetermined association operation.

In S120, a target media resource is obtained in response to a media resource obtaining operation in the obtaining interface. The media resource obtaining operation may be considered as an operation of obtaining a media resource. The media resource obtaining operation is not limited herein, as long as the obtaining of the media resource may be implemented, for example, the media resource may be obtained directly by shooting within the application, or a local media resource may be invoked and obtained in the application. The obtaining, use and storage of data involved in the present disclosure all comply with legal provisions and should be carried out with the data owner's consent. For example, invoking and obtaining the local media resource are implemented under the authorization from the user. The media resource may be a resource related to media, such as one or more of pictures, videos, texts, and animations.

The target media resource may be considered as the obtained media resource. In this operation, after the target media resource is obtained, the posting interface may be directly entered to detect the posting operation, for posting the target media resource as the media content; or the editing interface may be entered to realize editing of the target media resource and the chat control. The posting interface may be considered as an interface for posting media content. The editing interface may be considered as an interface for editing the target media resource and the chat control.

In S130, in response to a posting operation for the target media resource, the target media resource is posted as media content including a chat control. The chat control is a control associated with the target group.

The posting operation may be considered as an operation of posting the target media resource as the media content, for example, an operation of posting the target media resource as the media content to be browsed in the application by an user of the application. The media content may be a posted target media resource, or may be content after the target media resource is processed, for example, content by adding remaining visual information after the target media resource is displayed. The media content in the present disclosure may include a chat control and a target media resource, and may further include a control for implementing interaction with the media content, such as a control for comment.

The control associated with the target group may cause a user viewing the media content to learn the target group. The control associated with the target group may be a control associated with the target group, such as a control to join the target group, a control to enter the target group, or a control to know details of the target group. After the chat control is triggered, the target group may be entered, the target group may be joined, and/or the details of the target group may be known.

In this embodiment, the posting of the media content including the chat control is triggered in the chat interface, so that the user may participate in the interaction of the target group when browsing the media content in the application. The posting mode of the media content is enriched, and the sharing and interaction efficiency of the target group is improved.

According to the technical solution of the embodiments of the disclosure, after the predetermined association operation is performed in the chat interface corresponding to the target group, the obtaining interface is displayed, and after the media resource obtaining operation is performed in the obtaining interface, the target media resource is obtained. According to the present disclosure, the user may directly associate the group to the target media resource in the chat of the target group, and after the posting operation of the target media resource is performed, the target media resource may be posted as the media content including the chat control, the chat control is a control associated with the target group. The sharing and interaction efficiency of the target group is improved. The user participates in the target group interaction by browsing the media content, improving the interaction efficiency of the user participating in the interaction of the target group, and further improving the utilization rate of the target group in the application.

In an embodiment, the control associated with the target group is configured to display, during presenting of the media content, a chat association interface in response to a trigger for the chat control. The chat association interface is an interface associated with the target group.

This embodiment does not limit the chat association interface, as long as it is an interface that may be associated with the target group, for example, an interface that may implement chats in the chat interface corresponding to the target group.

The trigger in this embodiment is not limited, for example, it may be an operation of tapping a chat control. The chat association interface may be displayed after the chat control is triggered to implement the corresponding function.

The specific function of the chat association interface is not limited thereto, and may be determined based on the association between the user and the target group. For example, the user is inside the target group, and the chat association interface may be a chat interface, to implement a function of facilitating the user to open the group chat, improving the user return traffic. For another example, the user is not in the target group, and the chat association interface may be an adding interface, to implement adding the user to the target group, thereby improving the addition rate of the target group.

In an embodiment, the chat association interface includes an adding interface of the target group, and the adding interface is an interface for adding a user into the target group.

The adding interface may be considered as an interface implementing adding into the group. When the chat control is triggered, if the user performing the trigger is not inside the target group, the adding interface may be displayed to add the user to the target group.

In an embodiment, the chat association interface includes a chat interface of the target group, and the chat interface is an interface for chats among members of the target group.

After the chat control is triggered, if the user is a member in the target group, the chat interface of the target group may be displayed, enriching a dimension of the user entering the chat interface, and once the user browses the media content, the target group may be entered, preventing the user from performing excessive operations to enter the target group, and reducing the processing volume on the target group for the response to enter the target group.

In an embodiment, the chat association interface is displayed in a split-screen mode with an interface presenting the media content, or displayed in a form of a panel in the interface presenting the media content.

When the chat association interface is displayed, the chat association interface and the interface presenting the media content may be implemented in a split-screen mode, so that the user may browse the chat association interface and the interface presenting the media content at the same time, thereby improving the efficiency of interface presentation.

When the chat association interface is displayed, the chat association interface may be displayed in a form of a panel in the interface presenting the media content. The chat association interface is enhanced, and the user's operation rate with the chat association interface is improved.

In an embodiment, after obtaining the target media resource, the method further includes: displaying the target media resource and the chat control in an editing interface. In this embodiment, after obtaining the target media resource, the editing interface may be displayed, and the target media resource and the chat control are presented on the editing interface. The editing interface may implement display and editing of the target media resource and the chat control.

In an embodiment, after displaying the target media resource and the chat control in the editing interface, the method further includes: adjusting the chat control in response to a trigger for the chat control in the editing interface.

The trigger for the chat control may be an operation of triggering adjustment of the chat control, for example, adjustment of content associated with the chat control such as a display position, a display size, and a display style of the chat control in the editing interface. The display style of the chat control in this embodiment is not limited thereto, for example, the chat control may be in a form of a sticker or may be in a form of an anchor. The trigger is not limited herein, the adjusted content is different, and the corresponding trigger is different.

A presentation form of the chat control in the editing interface may be the same as a presentation form of the chat control in the interface for presenting the media content, so that the chat control browsed by the user in the editing interface is consistent with the chat control in the interface for presenting the media content, enabling the display effect seen in the editing interface to be the effect obtained in the interface for presenting the media content, that is, what you see is what you get.

In an embodiment, after presenting the target media resource and the chat control in the editing interface, the method further includes: converting the chat control in response to a conversion operation for the chat control, the converted chat control corresponding to a converted target group.

The conversion operation may be considered as an operation of converting the chat control. Converting the chat control may be changing the chat control, for example, converting a control corresponding to the target group into a control corresponding to a further target group. The converted target group may be a target group different from the target group before conversion.

For example, the target group is a group of A, and the chat control is a chat control corresponding to the group of A. After the conversion operation is detected in an encoding interface, the chat control may be converted. The conversion operation may be a selection corresponding to a group of B, and the chat control is converted into a chat control corresponding to the group of B. After the chat control is converted, the chat control included in the media content is the chat control corresponding to the group of B.

In an embodiment, a display position of the chat control on the target media resource is the same as a display position of the chat control on the media content.

The display position on the target media resource may be a position of the chat control displayed on the target media resource. The display position of the chat control on the media content may be a position of the chat control displayed on the media content. These two positions being the same implements an effect of what you see being what you get, which facilitates the user to edit the display position of the chat control on the target media resource.

In an embodiment, posting, in response to the posting operation for the target media resource, the target media resource as the media content including the chat control includes: posting, in response to the posting operation for the target media resource on a posting interface, the target media resource as the media content including the chat control, the posting interface displaying an indication control associated with the chat control, and the indication control indicating that the media content is associated with the target group.

The posting interface may implement posting of the media content. An indication control may be displayed in the posting interface to facilitate the user to know the target group associated with the media content.

The indication control indicates the target group associated with the media content. If the user posts media content through the chat interface corresponding to the group of A, what indicated by the indication control in the posting interface may be the group of A.

In an embodiment, the indication control is configured to be deleted in response to a deletion operation for the indication control, and the posting interface with the indication control being deleted is configured to post the target media resource as the media content without the chat control.

The deletion operation may be considered to an operation of deleting the indication control, and a trigger mode of the deletion operation is not limited herein. In response to the deletion operation, the indication control may be deleted in the posting interface. After the indication control is deleted in the posting interface, and when the target media resource is posted as the media content, the chat control will not be included. There will be no interfaces of the target group in the media content.

In an embodiment, the indication control is configured to be converted in response to a conversion operation for the indication control, and the converted indication control indicates that the media content is associated with a converted target group, and the posting interface with the indication control being converted is configured to post the target media resource as media content, the media content including a chat control associated with the converted target group.

The conversion operation may be considered as an operation of converting the target group corresponding to the indication control. The conversion operation is not limited herein, as long as the change of the target group may be achieved.

After obtaining the conversion operation, the indication control may be converted in the posting interface to indicate the converted target group, so that the posted media content is associated with the converted target group.

After the indication control is converted, the chat control included in the posted media content is a control associated with the converted target group.

The converted target group may be entered or joined through the interface presenting the media content.

In an embodiment, the conversion operation converts an indication control indicating that the media content is associated with the target group into a conversion control indicating that the media content is associated with the converted target group.

In an embodiment, FIG. 2 is a schematic flowchart of a further method of posting content according to an embodiment of the present disclosure. In this embodiment, the operation of displaying the obtaining interface is refined on the basis of the above embodiments, and the specific operations are as follows: S210, displaying the obtaining interface in response to a predetermined association operation for the predetermined association control in the chat interface corresponding to the target group.

The predetermined association control may be a control that is predetermined and corresponds to the predetermined association operation. The association may be embodied as that the target group is associated with the media content posted by the predetermined association control. The target group may be entered or added through the media content.

In this embodiment, the predetermined association operation in the chat interface may be an operation directly on the predetermined association control displayed on the chat interface, for example, a tapping operation of the predetermined association control.

In this embodiment, operation may be directly carried out in the chat interface to implement the display of the obtaining interface, and to implement posting of the media content. The predetermined management control may be directly displayed in the chat interface.

This embodiment defines an application scenario in which the display of the obtaining interface is triggered directly through the chat interface, which, for example, may be an initial state or an empty state created in the target group. The initial state may be a scenario in which the number of members in the target group is lower than a certain number at an initial stage of creating the target group. The empty state may be a scenario in which a target group is just created and only a group owner is present. It is indicated that the user posts media content associated with the target group through the predetermined association control.

In S220, a target media resource is obtained in response to a media resource obtaining operation in the obtaining interface.

In S230, in response to a posting operation for the target media resource, the target media resource is posted as media content including a chat control. The chat control is a control associated with the target group.

According to the embodiment of the presenting, an obtaining interface is displayed in response to a predetermined association operation in a chat interface corresponding to a target group; in response to a media resource obtaining operation in the obtaining interface, a target media resource is obtained; in response to a posting operation for the target media resource, the target media resource is posted as media content including a chat control, and the chat control is a control associated with the target group. In the present disclosure, after the predetermined association operation is performed in the chat interface corresponding to the target group, the obtaining interface is displayed, and after the media resource obtaining operation is performed in the obtaining interface, the target media resource is obtained. According to the present disclosure, the user may directly associate the group to the target media resource in the chat of the target group, and after the posting operation of the target media resource is performed, the target media resource may be posted as the media content including the chat control, the chat control is a control associated with the target group. The sharing and interaction efficiency of the target group is improved; and meanwhile, the user participates in the interaction of the target group by browsing the media content, improving the interaction efficiency of the user participating in the group chat interaction, and further improving the utilization rate of the target group in the application.

In this embodiment, posting of the media content is directly triggered in the chat interface, thereby realizing convenient posting of the media content.

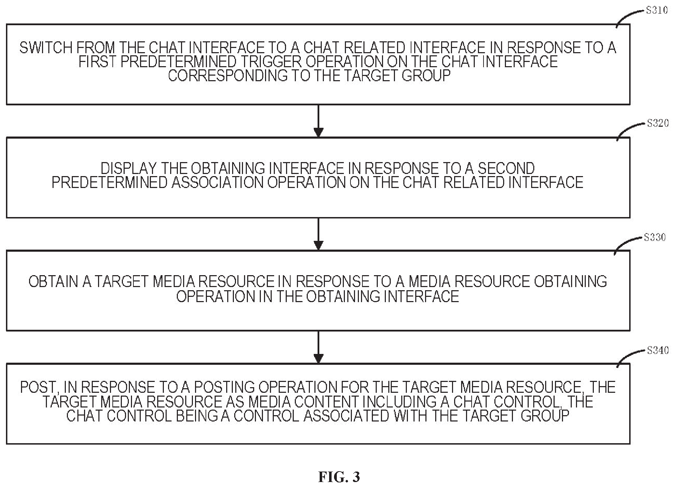

FIG. 3 is a schematic flowchart of a still further method of posting content according to an embodiment of the present disclosure. This embodiment further illustrates the operation of displaying the obtaining interface on the basis of the above embodiments, and the specific operations are as follows: S310, in response to a first predetermined trigger for the chat interface corresponding to the target group, switching from the chat interface to a chat related interface.

The predetermined association operation includes a first predetermined trigger and a second predetermined trigger. In this embodiment, the predetermined association operation includes two operations, i.e., the first predetermined trigger and the second predetermined trigger.

The first predetermined trigger is an operation of triggering a chat related interface in the chat interface. The chat related interface may be considered as an interface related to the chat. The chat related interface includes at least one of the following: a group management interface, a group sharing interface, and a group detail interface.

The group management interface may be an interface for implementing group management. The group sharing interface may be an interface for implementing group sharing. The group detail interface may be an interface for viewing group details.

The control corresponding to the chat related interface on the chat interface being triggered may be considered as the first predetermined trigger, to switch from the chat interface to the chat related interface.

In S320, in response to a second predetermined association operation in the chat related interface, the obtaining interface is displayed.

The second predetermined association operation may be considered as an operation that is triggered on the chat related interface for displaying the obtaining interface.

This operation does not limit the manner in which the second predetermined association control is triggered, for example, it may be an operation of tapping the corresponding control.

In this embodiment, when the posting of the media content is triggered in the chat interface, the posting of the media content may be implemented through a lower-level interface of the chat interface.

In this embodiment, the predetermined association control is prevented from being displayed in the chat interface, and avoiding the occupation of the predetermined association control in the chat interface.

In S330, in response to a media resource obtaining operation in the obtaining interface, a target media resource is obtained.

In S340, in response to a posting operation for the target media resource, the target media resource is posted as media content including a chat control. The chat control is a control associated with the target group.

According to the embodiment, the specific solution of displaying the obtaining interface is refined, the display of the obtaining interface is triggered through a two-level interface structure, i.e., the chat interface and the chat related interface, so that posting of the media content is implemented, the predetermined association control is prevented from being displayed in the chat interface, and the available area in the chat interface is enlarged.

The present disclosure will be illustratively described below, and the method of posting content provided by the present disclosure may be considered as a manner for supporting addition of a group chat, to implement a convenient group chat submission, and when a work, i.e., media content is posted, a group chat tag is added to a submission path to support a consumer side, that is, a user who browses the media content taps the group chat tag and then joins the group chat. The group chat may be considered as a target group chat. The group chat tag may be a chat control, for example, a chat control in the interface presenting the media content. While posting of the media content is implemented, the group chat is quickly and publicly shared to the application.

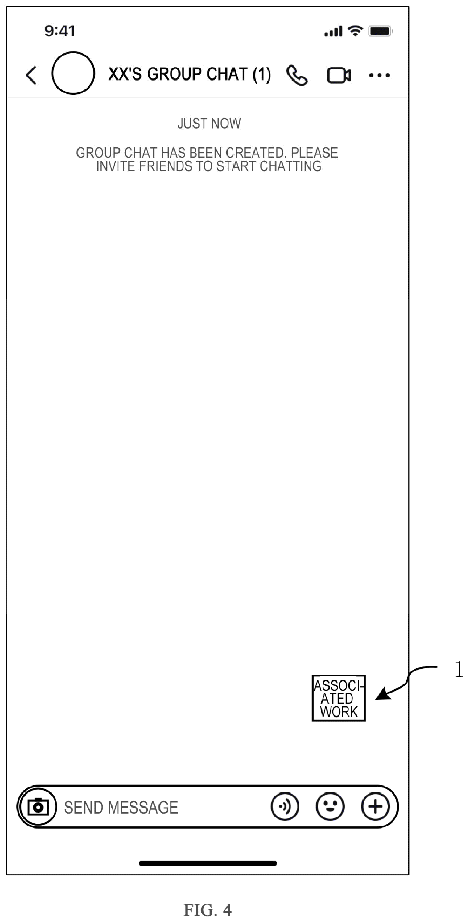

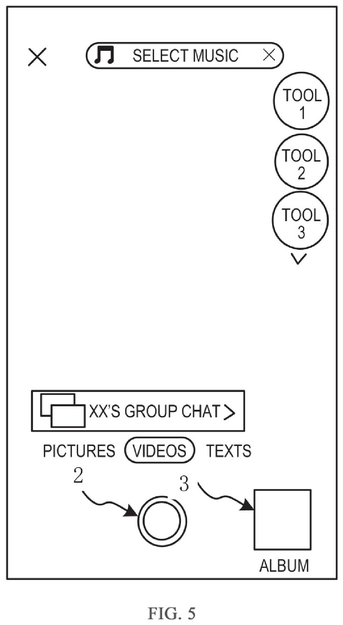

FIG. 4 is a schematic interface diagram of a chat interface according to an embodiment of the present disclosure, and FIG. 5 is a schematic interface diagram of an obtaining interface according to an embodiment of the present disclosure. A predetermined association control 1 is displayed in the chat interface. The predetermined association control 1 is displayed below the target group. After the user taps the predetermined association control 1, a shooting page, i.e., the obtaining interface is entered (see FIG. 5), to obtain the target media resource. For example, the target media resource may be shot by tapping the shooting control 2, or the obtaining control 3 may be tapped to implement the local obtaining of the target media resource. The remaining controls in the shooting interface may be merely examples, and whether to use may be determined according to actual needs in practical applications. For example, a chat control may be included in the obtaining interface. The function of the chat control in the obtaining interface is not limited herein, for example, it may have a display function only, or may have an adjusting function, for example, adjusting at least one of a display position, a display style, and a display size.

After the target media resource is obtained, the obtaining interface may be switched to an editing interface, a chat control may not be included in the editing interface, or a chat control may be included in the editing interface. The interface style of the editing interface is not limited, and the target media resource may be displayed on the basis of the obtaining interface. The editing interface includes a control for triggering the display of the posting interface. After the control triggered to display the posting interface is triggered, the posting interface is displayed.

The display modes of the chat control in the obtaining interface and the editing interface are consistent, for example, the display positions are the same, the display styles are the same, and the display sizes are the same, ensuring the chat control displayed in the obtaining interface and the editing interface to be consistent with the chat control displayed in the interface presenting the media content, and achieving the effect of what you see being what you get.

The display style of the chat control is not limited in the present disclosure, for example, may be in a form of a sticker, and the content shown on the sticker is not limited, and may include information such as a group avatar of the target group, indication information indicating a group chat corresponding to the chat control, and a group name of the target group.

FIG. 4 illustrates a manner of triggering posting of media content through the predetermined association control 1. The tapping on "..." in the upper right corner of the chat interface may trigger the display of the chat related interface. After the second predetermined association operation on the chat related interface is performed, the obtaining interface may be displayed. The interface style of the chat interface is not limited herein. A sharing control may be set at an adjacent position of "...". After the sharing control is tapped, a group sharing interface may be displayed, and after the second predetermined association operation (for example, tapping a work posting invitation control) is performed on the group sharing interface, the obtaining interface may be displayed.

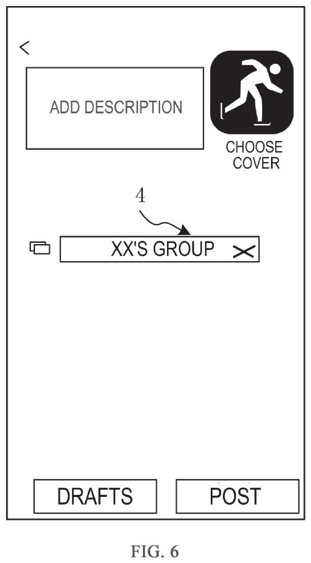

FIG. 6 is a schematic interface diagram of a posting interface according to an embodiment of the present disclosure. Referring to FIG. 6, the posting interface may be an interface displayed after the obtaining interface, and an indication control 4 is included in the posting interface, so that a tag of the group chat is attached automatically in the posting interface. Deletion of the indication control 4 may be implemented by tapping on "×" in the indication control 4 (i.e., a deletion operation). By tapping an area other than "×" in the indication control 4, conversion of the indication control 4 may be implemented, and the tag of the group chat is re-added. The control corresponding to tapping "post" is the posting operation.

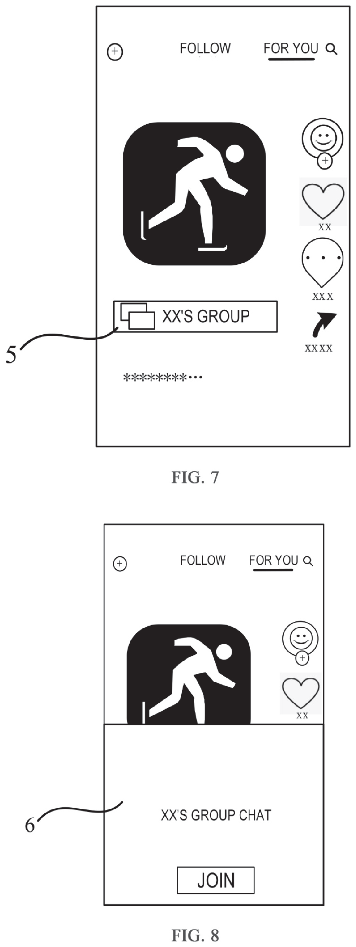

FIG. 7 is a schematic interface diagram of an interface presenting media content according to an embodiment of the present disclosure. Referring to FIG. 7, media content including a chat control 5 is displayed in the interface presenting the media content. The capabilities of the chat control 5 may be aligned with the capabilities of tags within the application.

FIG. 8 is a schematic interface diagram of a chat association interface according to an embodiment of the present disclosure. Referring to FIG. 8, the chat association interface may be an adding interface 6 displayed in a form of a panel. The display manner and function of the interface are merely examples, and details are not described herein again. After the chat control is tapped, a group join panel may be displayed, that is, the adding interface 6, the group join panel may be a multiplexed panel, and a multiplex object is not limited herein. Basic information such as a group name, a number of members in the group, and a group owner may be displayed on the adding interface 6. After tapping a "join" control, an approval process may be entered, and a prompt is displayed on the adding interface. When approval is not needed, the group chat may be directly joined and the conversation interface may be entered. The chat interface may be implemented in a split-screen mode with an interface presenting the media content, and the user may browse the media content on the interface presenting the media content. A chat is implemented in the chat interface.

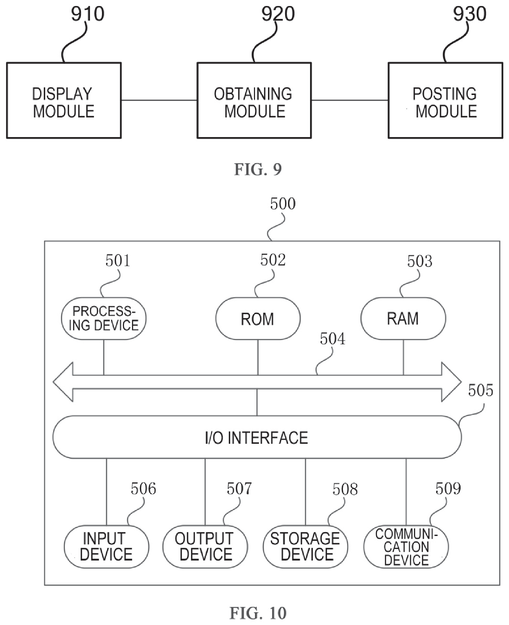

FIG. 9 is a schematic structural diagram of an apparatus for posting content according to an embodiment of the present disclosure. As shown in FIG. 9, the apparatus includes: a display module 910 configured to display an obtaining interface in response to a predetermined association operation in a chat interface corresponding to a target group; an obtaining module 920 configured to obtain a target media resource in response to a media resource obtaining operation in the obtaining interface; and a posting module 930 configured to post, in response to a posting operation for the target media resource, the target media resource as media content comprising a chat control, the chat control being a control associated with the target group.

According to the technical solution provided by the embodiment of the present disclosure, in the present disclosure, the user may directly associate the group to the target media resource in the chat of the target group, and after the posting operation of the target media resource is performed, the target media resource may be posted as the media content including the chat control, the chat control is a control associated with the target group. The sharing and interaction efficiency of the target group is improved. The user participates in the target group interaction by browsing the media content, improving the interaction efficiency of the user participating in the interaction of the target group, and further improving the utilization rate of the target group in the application.

In an embodiment, the control associated with the target group is configured to display, during presenting of the media content, a chat association interface in response to a trigger for the chat control. The chat association interface is an interface associated with the target group.

In an embodiment, the chat association interface includes an adding interface of the target group, and the adding interface is an interface for adding a user into the target group.

In an embodiment, the chat association interface includes a chat interface for the target group, and the chat interface is an interface for chats among members of the target group.

In an embodiment, the chat association interface is displayed in a split-screen mode with an interface presenting the media content, or displayed in a form of a panel in the interface presenting the media content.

In an embodiment, the apparatus for posting content further includes: a presenting module configured to: after obtaining the target media resource, present the target media resource and the chat control in an editing interface.

In an embodiment, the apparatus for posting content further includes: an adjusting module configured to: after presenting the target media resource and the chat control in the editing interface, adjust the chat control in response to a trigger for the chat control in the editing interface.

In an embodiment, the apparatus for posting content further includes: a converting module configured to, after presenting the target media resource and the chat control in the editing interface, convert the chat control in response to a conversion operation for the chat control. The converted chat control corresponds to a converted target group.

In an embodiment, a display position of the chat control on the target media resource is same as a display position of the chat control on the media content.

In an embodiment, the posting module 930 is configured to post, in response to the posting operation for the target media resource on a posting interface, the target media resource as media content including the chat control. The posting interface displays an indication control associated with the chat control, and the indication control indicates that the media content is associated with the target group.

In an embodiment, the indication control is configured to be deleted in response to a deletion operation for the indication control, and the posting interface with the indication control being deleted is configured to post the target media resource as the media content without the chat control.

In an embodiment, the indication control is configured to be converted in response to a conversion operation for the indication control, and the converted indication control indicates that the media content is associated with a converted target group, and the posting interface with the indication control being converted is configured to post the target media resource as media content. The media content includes a chat control associated with the converted target group.

In an embodiment, the display module 910 is specifically configured to: display the obtaining interface in response to a predetermined association operation for the predetermined association control in the chat interface corresponding to the target group.

In an embodiment, the display module 910 is specifically configured to: switch from the chat interface to a chat related interface in response to a first predetermined trigger for the chat interface corresponding to the target group; and display the obtaining interface in response to a second predetermined association operation for the chat related interface. The predetermined association operation includes a first predetermined trigger and a second predetermined trigger, and the chat related interface includes at least one of the following: a group management interface, a group sharing interface, and a group detail interface.

The apparatus for posting content provided by the embodiments of the present disclosure may perform the method of posting content provided by any embodiment of the present disclosure, and has functional modules and beneficial effects corresponding to performing the method.

It should be noted that various units and modules included in the foregoing apparatus are only divided according to the function logic, but are not limited to the foregoing division, as long as the corresponding functions may be implemented; in addition, specific names of the functional units are merely for ease of distinguishing, and are not intended to limit the protection scope of the embodiments of the present disclosure.

FIG. 10 is a schematic structural diagram of an electronic device according to an embodiment of the present disclosure. Referring to FIG. 10, a schematic structural diagram of an electronic device (such as the terminal device or server in FIG. 10) suitable for implementing the embodiments of the present disclosure is shown. The terminal device in the embodiments of the present disclosure may include, but is not limited to, a mobile terminal such as a mobile phone, a notebook computer, a digital broadcast receiver, a PDA (personal digital assistant), a PAD (pad tablet), a PMP (portable multimedia player), an in-vehicle terminal (for example, an in-vehicle navigation terminal), and a fixed terminal such as a digital TV, a desktop computer, or the like. The electronic device shown in FIG. 10 is merely an example and should not impose any limitation on the functions and scope of use of the embodiments of the present disclosure.

As shown in FIG. 10, the electronic device 500 may include a processing device (for example, a central processing unit, a graphics processor, etc.) 501, which may perform various appropriate actions and processing according to a program stored in a read-only memory (ROM) 502 or a program loaded into a random access memory (RAM) 503 from a storage device 508. In the RAM 503, various programs and data required by the operation of the electronic device 500 are also stored. The processing device 501, the ROM 502, and the RAM 503 are connected to each other through a bus 504. An edit/output (I/O) interface 505 is also connected to the bus 504.

Generally, the following devices may be connected to the I/O interface 505; may include an input device 506 including, for example, a touch screen, a touchpad, a keyboard, a mouse, a camera, a microphone, an accelerometer, a gyroscope, etc.; may include an output device 507 including, for example, a liquid crystal display (LCD), a speaker, a vibrator, etc.; may include a storage device 508 including, for example, a magnetic tape, a hard disk, etc.; and a communication device 509. The communication device 509 may allow the electronic device 500 to communicate wirelessly or wired with other devices to exchange data. While FIG. 10 shows an electronic device 500 having various devices, it should be understood that it is not required to implement or have all illustrated devices. More or fewer devices may alternatively be implemented or provided.

In particular, according to an embodiment of the present disclosure, the process described above with reference to the flowchart may be implemented as a computer software program. For example, embodiments of the present disclosure include a computer program product including a computer program carried on a non-transitory computer readable medium, the computer program including program code for performing the method shown in the flowchart. In such embodiments, the computer program may be downloaded and installed from the network through the communication device 509, or installed from the storage device 508, or from the ROM 502. When the computer program is executed by the processing apparatus 501, the foregoing functions defined in the method of the embodiments of the present disclosure are performed.

The names of messages or information interacted between the plurality of devices in embodiments of the present disclosure are for illustrative purposes only and are not intended to limit the scope of such messages or information.

The electronic device provided by the embodiments of the present disclosure and the method of posting content provided in the foregoing embodiments belong to the same inventive concept, and technical details not described in detail in this embodiment may refer to the foregoing embodiments, and this embodiment has the same beneficial effects as the foregoing embodiments.

An embodiment of the present disclosure provides a computer storage medium having a computer program stored thereon, the program, when executed by a processor, implements the method of posting content provided in the foregoing embodiments.

It should be noted that the computer-readable medium described above may be a computer-readable signal medium, a computer-readable storage medium, or any combination of the foregoing two. The computer-readable storage medium may be, for example, but not limited to, an electrical, magnetic, optical, electromagnetic, infrared, or semiconductor system, apparatus, or device, or any combination thereof. More specific examples of computer-readable storage medium may include, but are not limited to, an electrical connection having one or more wires, a portable computer diskette, a hard disk, a random access memory (RAM), a read-only memory (ROM), an erasable programmable read-only memory (EPROM or flash memory), an optical fiber, a portable compact disk read-only memory (CD-ROM), an optical storage device, a magnetic storage device, or any suitable combination of the foregoing. In the present disclosure, the computer-readable storage medium may be any tangible medium containing or storing a program that may be used by or in connection with an instruction execution system, apparatus, or device. In the present disclosure, the computer-readable signal medium may include a data signal propagated in a baseband or as a part of a carrier, where the computer-readable program code is carried. Such a propagated data signal may take a variety of forms including, but not limited to, an electromagnetic signal, an optical signal, or any suitable combination of the foregoing. The computer-readable signal medium may also be any computer-readable medium, other than a computer readable storage medium, that may send, propagate, or transmit a program for use by or in connection with an instruction execution system, apparatus, or device. The program code included on the computer-readable medium may be transmitted with any suitable medium, including, but not limited to: wires, optical cables, RF (radio frequency), or the like, or any suitable combination of the foregoing.

In some implementations, a client and a server may communicate using any currently known or future developed network protocol, such as HTTP (HyperText Transfer Protocol), and may be interconnected with any form or medium of digital data communication (e.g., a communication network). Examples of the communication network include local area networks ("LANs"), wide area networks ("WANs"), internets (e.g., the Internet), and peer-to-peer networks (e.g., ad hoc peer-to-peer networks), as well as any currently known or future developed networks.

The computer-readable medium described above may be included in the electronic device; or may be separately present without being assembled into the electronic device.

The computer-readable medium carries one or more programs, and when the one or more programs are executed by the electronic device, the electronic device is caused.

The computer readable medium carries one or more programs, and when the one or more programs are executed by the electronic device, the electronic device is caused to: display an obtaining interface in response to a predetermined association operation in a chat interface corresponding to a target group; obtain a target media resource in response to a media resource obtaining operation in the obtaining interface; and post, in response to a posting operation for the target media resource, the target media resource as media content including a chat control, the chat control being a control associated with the target group.

Computer program code for performing the operations of the present disclosure may be written in one or more programming languages or a combination thereof, the programming languages include, but not limited to, object oriented programming languages such as Java, Smalltalk, or C++, and conventional procedural programming languages, such as "C" language or similar programming languages. The program code may be executed entirely on a user computer, partially on a user computer, as a stand-alone software package, partially on a user computer and partially on a remote computer, or entirely on a remote computer or server. In the case of a remote computer, the remote computer may be connected to the user computer through any kind of network, including a local area network (LAN) or a wide area network (WAN), or may be connected to an external computer (e.g., connected through the Internet using an Internet service provider).

The flowcharts and block diagrams in the figures illustrate possibly implemented architecture, functionality, and operation of systems, methods, and computer program products according to various embodiments of the present disclosure. In this regard, each block in the flowchart or block diagram may represent a module, program segment, or portion of code that includes one or more executable instructions for implementing the specified logical function. It should also be noted that in some alternative implementations, the functions noted in the blocks may also occur in a different order than that illustrated in the figures. For example, two consecutively represented blocks may actually be performed substantially in parallel, which may sometimes be performed in the reverse order, depending on the functionality involved. It is also noted that each block in the block diagrams and/or flowcharts, as well as combinations of blocks in the block diagrams and/or flowcharts, may be implemented with a dedicated hardware-based system that performs the specified functions or operations, or may be implemented in a combination of dedicated hardware and computer instructions.

The units involved in the embodiments of the present disclosure may be implemented with software, or may be implemented with hardware. In some cases, the name of the unit does not constitute a limitation on the unit itself. For example, a first obtaining unit may be further described as "a unit obtaining at least two Internet Protocol addresses".

The functions described above may be performed, at least in part, by one or more hardware logic components. For example, without limitation, illustrative types of hardware logic components that may be used include: field programmable gate arrays (FPGAs), application specific integrated circuits (ASICs), application specific standard products (ASSPs), system-on-a-chip (SOCs), complex programmable logic devices (CPLDs), and the like.

In the context of the present disclosure, a machine-readable medium may be a tangible medium that may contain or store a program for use by or in connection with an instruction execution system, apparatus, or device. The machine-readable medium may be a machine-readable signal medium or a machine-readable storage medium. The machine-readable medium may include, but is not limited to, an electronic, magnetic, optical, electromagnetic, infrared, or semiconductor system, apparatus, or device, or any suitable combination of the foregoing. More specific examples of the machine-readable storage medium may include electrical connection based on one or more lines, a portable computer disk, a hard disk, a random access memory (RAM), a read-only memory (ROM), an erasable programmable read-only memory (EPROM or flash memory), an optical fiber, a portable compact disc read-only memory (CD-ROM), an optical storage device, a magnetic storage device, or any suitable combination of the foregoing.

According to one or more embodiments of the present disclosure, [example 1] provides a method of posting content, including: displaying an obtaining interface in response to a predetermined association operation in a chat interface corresponding to a target group; obtaining a target media resource in response to a media resource obtaining operation in the obtaining interface; and posting, in response to a posting operation for the target media resource, the target media resource as media content including a chat control, the chat control being a control associated with the target group.

According to one or more embodiments of the present disclosure, [example 2] provides the method of example 1, where the control associated with the target group is configured to display, during presenting of the media content, a chat association interface in response to a trigger for the chat control, the chat association interface being an interface associated with the target group.

According to one or more embodiments of the present disclosure, [example 3] provides the method of example 2, where the chat association interface includes an adding interface of the target group, and the adding interface is an interface for adding a user into the target group.

According to one or more embodiments of the present disclosure, [example 4] provides the method of example 2, where the chat association interface includes a chat interface for the target group, and the chat interface is an interface for chats among members of the target group.

According to one or more embodiments of the present disclosure, [example 5] provides the method of example 2, where the chat association interface is displayed in a split-screen mode with an interface presenting the media content, or displayed in a form of a panel in the interface presenting the media content.

According to one or more embodiments of the present disclosure, [example 6] provides the method of example 1, where after obtaining the target media resource, the method further includes: presenting the target media resource and the chat control in an editing interface.

According to one or more embodiments of the present disclosure, [example 7] provides the method of example 6, where after presenting the target media resource and the chat control in the editing interface, the method further includes: adjusting the chat control in response to a trigger for the chat control in the editing interface.

According to one or more embodiments of the present disclosure, [example 8] provides the method of example 6, where after presenting the target media resource and the chat control in the editing interface, the method further includes: converting the chat control in response to a conversion operation for the chat control, the converted chat control corresponding to a converted target group.

According to one or more embodiments of the present disclosure, [example 9] provides the method of example 1, where a display position of the chat control on the target media resource is same as a display position of the chat control on the media content.

According to one or more embodiments of the present disclosure, [example 10] provides the method of example 1, wherein posting, in response to the posting operation for the target media resource, the target media resource as the media content including the chat control includes: posting, in response to the posting operation for the target media resource on a posting interface, the target media resource as the media content including the chat control, the posting interface displaying an indication control associated with the chat control, and the indication control indicating that the media content is associated with the target group.

According to one or more embodiments of the present disclosure, [example 11] provides the method of example 10, where the indication control is configured to be deleted in response to a deletion operation for the indication control, and the posting interface with the indication control being deleted is configured to post the target media resource as the media content without the chat control.

According to one or more embodiments of the present disclosure, [example 12] provides the method of example 10, where the indication control is configured to be converted in response to a conversion operation for the indication control, and the converted indication control indicates that the media content is associated with a converted target group, and the posting interface with the indication control being converted is configured to post the target media resource as media content, the media content including a chat control associated with the converted target group.

According to one or more embodiments of the present disclosure, [example 13] provides the method of example 1, where displaying the obtaining interface in response to the predetermined association operation in the chat interface corresponding to the target group includes: displaying the obtaining interface in response to a predetermined association operation for the predetermined association control in the chat interface corresponding to the target group.

According to one or more embodiments of the present disclosure, [example 14] provides the method of example 1, where displaying the obtaining interface in response to the predetermined association operation in the chat interface corresponding to the target group includes: switching from the chat interface to a chat related interface in response to a first predetermined trigger for the chat interface corresponding to the target group; and displaying the obtaining interface in response to a second predetermined association operation in the chat related interface, where the predetermined association operation includes a first predetermined trigger and a second predetermined trigger, and the chat related interface includes at least one of: a group management interface, a group sharing interface, or a group detail interface.

According to one or more embodiments of the present disclosure, [example 15] provides an apparatus for posting content, including: a display module configured to display an obtaining interface in response to a predetermined association operation in a chat interface corresponding to a target group; an obtaining module configured to obtain a target media resource in response to a media resource obtaining operation in the obtaining interface; and a posting module configured to post, in response to a posting operation for the target media resource, the target media resource as media content including a chat control, the chat control being a control associated with the target group.

According to one or more embodiments of the present disclosure, [example 16] provides an electronic device, including: one or more processing devices; and a storage device configured to store one or more programs.

The one or more programs, when executed by the one or more processing devices, implement the method of posting content according to any one of examples 1-14.

According to one or more embodiments of the present disclosure, [example 17] provides a storage medium including computer-executable instructions, where the computer-executable instructions, when executed by a computer processor, are configured to perform the method of posting content according to any one of examples 1-14.

The above description is merely an illustration of the preferred embodiments of the present disclosure and the principles of the applied technology. It should be understood by those skilled in the art that the disclosure scope involved in the present disclosure is not limited to the technical solutions of the specific combination of the above technical features, and should also cover other technical solutions formed by any combination of the above technical features or their equivalent features without departing from the above disclosed concept, for example, technical solutions formed by mutually replacing the above features and technical features disclosed in the present disclosure (but not limited thereto) having similar functions.

Further, while operations are depicted in a particular order, this should not be understood to require that these operations be performed in the particular order shown or in sequential order. In certain circumstances, multitasking and parallel processing may be advantageous. Likewise, while several specific implementation details are included in the discussion above, these should not be construed as limiting the scope of the present disclosure. Certain features described in the context of separate embodiments may also be implemented in combination in a single embodiment. Conversely, the various features described in the context of a single embodiment may also be implemented in multiple embodiments either individually or in any suitable subcombination.

Although the present subject matter has been described in language specific to structural features and/or methodological acts, it is to be understood that the subject matter defined in the appended claims is not necessarily limited to the specific features or acts described above. Rather, the specific features and acts described above are merely example forms of implementing the claims.

## Claims

1. A method of posting content, comprising:
displaying an obtaining interface in response to a predetermined association operation in a chat interface corresponding to a target group;
obtaining a target media resource in response to a media resource obtaining operation in the obtaining interface; and
posting, in response to a posting operation for the target media resource, the target media resource as media content comprising a chat control, the chat control being a control associated with the target group.

2. The method of claim 1, wherein the control associated with the target group is configured to display, during presenting of the media content, a chat association interface in response to a trigger for the chat control, the chat association interface being an interface associated with the target group.

3. The method of claim 2, wherein the chat association interface comprises an adding interface of the target group, and the adding interface is an interface for adding a user into the target group.

4. The method of claim 2, wherein the chat association interface comprises a chat interface for the target group, and the chat interface is an interface for chats among members of the target group.

5. The method of claim 2, wherein the chat association interface is displayed in a split-screen mode with an interface presenting the media content, or displayed in a form of a panel in the interface presenting the media content.

6. The method of claim 1, wherein after obtaining the target media resource, the method further comprises:
presenting the target media resource and the chat control in an editing interface.

7. The method of claim 6, wherein after presenting the target media resource and the chat control in the editing interface, the method further comprises:
adjusting the chat control in response to a trigger for the chat control in the editing interface.

8. The method of claim 6, wherein after presenting the target media resource and the chat control in the editing interface, the method further comprises:
converting the chat control in response to a conversion operation for the chat control, the converted chat control corresponding to a converted target group.

9. The method of claim 1, wherein a display position of the chat control on the target media resource is same as a display position of the chat control on the media content.

10. The method of claim 1, wherein posting, in response to the posting operation for the target media resource, the target media resource as the media content comprising the chat control comprises:
posting, in response to the posting operation for the target media resource on a posting interface, the target media resource as the media content comprising the chat control, the posting interface displaying an indication control associated with the chat control, and the indication control indicating that the media content is associated with the target group.

11. The method of claim 10, wherein the indication control is configured to be deleted in response to a deletion operation for the indication control, and the posting interface with the indication control being deleted is configured to post the target media resource as the media content without the chat control.

12. The method of claim 10, wherein the indication control is configured to be converted in response to a conversion operation for the indication control, and the converted indication control indicates that the media content is associated with a converted target group, and the posting interface with the indication control being converted is configured to post the target media resource as media content, the media content comprising a chat control associated with the converted target group.

13. The method of claim 1, wherein displaying the obtaining interface in response to the predetermined association operation in the chat interface corresponding to the target group comprises:
displaying the obtaining interface in response to a predetermined association operation for the predetermined association control in the chat interface corresponding to the target group.

14. The method of claim 1, wherein displaying the obtaining interface in response to the predetermined association operation in the chat interface corresponding to the target group comprises:
switching from the chat interface to a chat related interface in response to a first predetermined trigger for the chat interface corresponding to the target group; and
displaying the obtaining interface in response to a second predetermined association operation in the chat related interface,
wherein the predetermined association operation comprises a first predetermined trigger and a second predetermined trigger, and the chat related interface comprises at least one of: a group management interface, a group sharing interface, or a group detail interface.

15. An apparatus for posting content, comprising:
a display module configured to display an obtaining interface in response to a predetermined association operation in a chat interface corresponding to a target group;
an obtaining module configured to obtain a target media resource in response to a media resource obtaining operation in the obtaining interface;
a posting module configured to post, in response to a posting operation for the target media resource, the target media resource as media content comprising a chat control, the chat control being a control associated with the target group.

16. An electronic device, comprising:
one or more processing devices;
a storage device configured to store one or more programs;
wherein the one or more processing devices, when executed by the one or more processing devices, implement the method of posting content according to any of claims 1-14.

17. A storage medium comprising computer-executable instructions, wherein the computer-executable instructions, when executed by a computer processor, are configured to perform the method of positing content according to any of claims 1-14.
